# EUROPEAN PATENT APPLICATION

(11) **EP 4 769 537 A1**
(43) Date of publication of application: **01.07.2026**
(21) Application number: 25861897.4
(22) Date of filing: 20.02.2025
(51) Int. Cl.: H01M 4/136, H01M 4/1397, H01M 4/58

(54) **POSITIVE ELECTRODE SHEET AND PREPARATION METHOD THEREFOR, AND BATTERY**

(30) Priority: 09.09.2024 CN 202411259258
(71) Applicant: Eve Power Co., Ltd., Jingmen, Hubei 448000 (CN)
(72) Inventor: ZHAO, Zhenshuai, Hubei 448000 (CN); HUANG, Chengjie, Hubei 448000 (CN); ZHU, Weihua, Hubei 448000 (CN); WEI, Haitao, Hubei 448000 (CN)
(74) Representative: Studio Torta S.p.A.
(86) International application number: PCT/CN2025/078256
(87) International publication number: WO 2026/051309

(57) **Abstract**

The present application provides a positive electrode plate, a method for preparing the same, and a battery. The positive electrode plate includes a positive current collector, a first positive electrode active coating layer, and a second positive electrode active coating layer. In the first positive electrode active coating layer, a mass ratio of a first lithium manganese iron phosphate active material to a nickel-cobalt-manganese ternary active material is (80-90):(8-15). The second positive electrode active coating layer includes a second lithium manganese iron phosphate active material. An areal density ρ₁ of the first positive electrode active coating layer and an areal density ρ₂ of the second positive electrode active coating layer satisfy: ρ₁ ≥ 240 g/m², ρ₂ ≥ 240 g/m², and |ρ1 - ρ2| ≤ 5 g/m².

## Description

This application claims priority to and the benefit of Chinese Patent Application No. 202411259258.3, filed on Sep. 09, 2024, the disclosure of which is incorporated herein by reference in its entirety.

### TECHNICAL FIELD

The present application relates to the field of lithium-ion battery technologies, and in particular, to a positive electrode plate, a method for preparing the same, and a battery.

### BACKGROUND

In recent years, energy storage technology has developed rapidly, with lithium-ion batteries being the most representative. The mainstream representatives are lithium iron phosphate (LFP) and ternary (NCM) batteries. Lithium iron phosphate offers advantages such as low cost, long cycle life, and high safety. However, it has low energy density and its low-temperature performance is less than satisfactory. On the other hand, ternary materials have high energy density and good rate performance, but they are more costly and pose certain safety risks.

Lithium manganese iron phosphate (LMFP) is structurally similar to lithium iron phosphate (LFP), both having an olivine structure, and it offers a higher voltage platform (4.2 V). Compared to LFP, LMFP can provide relatively higher energy density. Additionally, LMFP exhibits better low-temperature performance, with a capacity retention rate about 15% higher than LFP at -20°C. Lithium manganese iron phosphate (LMFP) is developed based on lithium iron phosphate (LFP) and lithium manganese phosphate (LMP), combining the advantages of both LFP and LMP, resulting in characteristics such as low cost and safety stability, making it a promising emerging positive electrode material for lithium-ion batteries. However, LMFP also has inherent drawbacks typical of olivine-type positive electrode materials, such as low intrinsic electronic conductivity (10⁻⁹-10⁻¹⁰ S·cm⁻¹) and lithium-ion diffusion rate (10⁻¹⁴-10⁻¹⁶ cm2·s⁻¹), which significantly affect its energy storage capacity and rate performance, hindering its large-scale application in high-performance lithium-ion batteries.

Based on this, various modification methods have been proposed to improve the electronic/ionic conductivity of LMFP, grounded in theoretical research. These methods mainly include surface coating, morphology control, and ion doping. Such modification methods have high requirements for material synthesis and generally make it difficult to achieve large-scale production, thus limiting the large-scale application of LMFP to some extent.

Therefore, providing a simple and effective modification method to enhance the performance of LMFP is of significant practical importance for further promoting its large-scale application in lithium batteries.

### SUMMARY

### TECHNICAL PROBLEM

In the related art, the modification methods for LMFP have high requirements for material synthesis and generally make it difficult to achieve large-scale production, thus limiting the large-scale application of LMFP to some extent.

### TECHNICAL SOLUTIONS

According to a first aspect of the present application, a positive electrode plate is provided, including a positive current collector, and a first positive electrode active coating layer and a second positive electrode active coating layer that are sequentially disposed on at least one side of the positive current collector. The first positive electrode active coating layer is disposed close to a side of the positive current collector, and the first positive electrode active coating layer includes a first lithium manganese iron phosphate active material and a nickel-cobalt-manganese ternary active material; in the first positive electrode active coating layer, a mass ratio of the first lithium manganese iron phosphate active material to the nickel-cobalt-manganese ternary active material is (80-90):(8-15). The second positive electrode active coating layer is disposed away from a side of the positive current collector, and the second positive electrode active coating layer includes a second lithium manganese iron phosphate active material; the areal density ρ₁ of the first positive electrode active coating layer and the areal density ρ₂ of the second positive electrode active coating layer satisfy: ρ₁ ≥ 240 g/m², ρ₂ ≥ 240 g/m², and |ρ₁ - ρ₂| ≤ 5 g/m².

According to a second aspect of the present application, a method for preparing the positive electrode plate according to the first aspect of the present application is provided, including the following steps: step S1, preparing a lithium manganese iron phosphate positive electrode slurry using the second lithium manganese iron phosphate active material, a second conductive agent, and a second binder; preparing lithium manganese iron phosphate blended with a nickel-cobalt-manganese ternary positive electrode slurry using the first slurry, the nickel-cobalt-manganese ternary active material, a first conductive agent, and a first binder; step S2, controlling a difference between a viscosity of the lithium manganese iron phosphate positive electrode slurry and a viscosity of the lithium manganese iron phosphate blended with the nickel-cobalt-manganese ternary positive electrode slurry to be less than or equal to 4000 mPa·s; simultaneously coating the lithium manganese iron phosphate positive electrode slurry and the lithium manganese iron phosphate blended with the nickel-cobalt-manganese ternary positive electrode slurry on the positive current collector to obtain the positive electrode plate through drying. The lithium manganese iron phosphate blended with the nickel-cobalt-manganese ternary positive electrode slurry is coated on a side close to the positive current collector, and the lithium manganese iron phosphate positive electrode slurry is coated on a side away from the positive current collector.

According to a third aspect of the present application, a battery is provided, including the positive electrode plate according to the first aspect of the present application.

### BENEFICIAL EFFECTS

The present application provides a positive electrode plate, a method for preparing the same, and a battery. The designed positive electrode plate contains a double-layer positive electrode active material layer. By controlling the positive electrode active material layer close to the current collector to have higher conductivity, and ensuring that the two positive electrode active material layers have very similar areal densities, the designed positive electrode plate achieves higher electronic and ionic conductivity. This effectively reduces the polarization of the positive electrode plate, significantly enhancing the cycling performance and thermal stability of the battery.

### BRIEF DESCRIPTION OF THE DRAWINGS

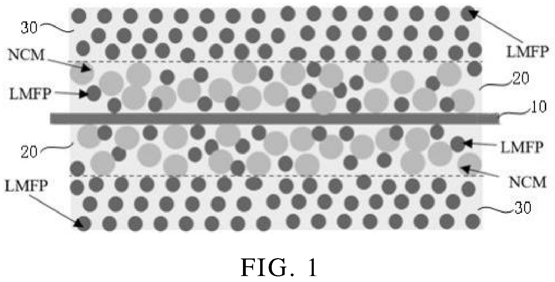

FIG. 1 is a schematic structural diagram of a positive electrode plate according to some embodiments of the present application.

### DETAILED DESCRIPTION

Referring to FIG. **1****,** the present application provides a positive electrode plate, which includes a positive current collector 10, and a first positive electrode active coating layer 20 and a second positive electrode active coating layer 30 that are sequentially disposed on at least one side of the positive current collector 10. The first positive electrode active coating layer 20 is disposed close to a side of the positive current collector 10, and the first positive electrode active coating layer 20 includes a first lithium manganese iron phosphate active material and a nickel-cobalt-manganese ternary active material; in the first positive electrode active coating layer 20, a mass ratio of the first lithium manganese iron phosphate active material to the nickel-cobalt-manganese ternary active material is (80-90):(8-15). The second positive electrode active coating layer 30 is disposed away from a side of the positive current collector 10, and the second positive electrode active coating layer 30 includes a second lithium manganese iron phosphate active material; the areal density ρ₁ of the first positive electrode active coating layer 20 and the areal density ρ₂ of the second positive electrode active coating layer 30 satisfy: ρ₁ ≥ 240 g/m², ρ₂ ≥ 240 g/m², and |ρ₁ - ρ₂| ≤ 5 g/m².

For the modification of LMFP, compared to other modification methods, directly using readily available materials for physical mixing and doping modification of LMFP is simpler, more convenient, and highly operable. Nickel-cobalt-manganese (NCM) ternary active materials are often used to modify LMFP due to their advantages of high conductivity, high lithium-ion diffusion performance, and high energy density. Currently, most of the market blends LMFP with NCM as active materials, and then combines them with conductive agents and binders according to electrode formulation ratios to produce electrodes. In electrode plates prepared using this method, the ion and electron transport rates of the active materials on the side close to and away from the current collector are inconsistent, which may amplify polarization phenomena and lead to unsatisfactory cycle life. A small portion involves making LMFP and NCM into separate double-layer electrodes, but the single NCM layer has poor thermal stability, posing safety risks.

This solution effectively enhances the conductivity and lithium-ion transmission efficiency of the LMFP-based positive electrode through a specially designed double-layer positive electrode active material structure. As a result, it effectively reduces the DCR growth rate of the battery and improves the cycling performance of the LMFP-based positive electrode. Specifically, in the positive electrode plate designed in the present application, the first layer of the positive electrode active material, namely the first positive electrode active coating layer 20 (the side close to the positive current collector 10), uses a mixed layer of LMFP and NCM. The second layer of the positive electrode active material, namely the second positive electrode active coating layer 30 (the side away from the positive current collector 10), uses only an LMFP layer. This design leverages the high conductivity of NCM in the first (lower) layer to enhance the electron transfer rate on a side of the positive current collector 10, allowing better coordination with ion transfer on the side away from the positive current collector 10. This accelerates electron transmission, enabling faster combination with ions in the electrolyte, thereby increasing electrochemical reaction activity, reducing polarization, and enhancing cycling performance. The second (upper) layer uses only an LMFP layer because LMFP has higher structural stability and better electrolyte resistance. As the outer layer, it acts as an effective interface barrier for the inner LMFP and NCM mixed layer, reducing contact between the electrolyte and NCM, thus minimizing side reactions on the positive electrode, reducing heat generation of the positive electrode, improving thermal stability of the battery, and reducing the DCR growth rate of the battery. This further optimizes the cycling performance and safety of the battery. Additionally, the LMFP outer layer can also provide some thermal insulation and diffusion barrier effects, further enhancing the thermal stability and safety of the battery.

The present application also specifies the areal densities of the first positive electrode active material layer and the second positive electrode active material layer, as well as the difference between the areal densities. The purpose of controlling these aspects is twofold: on one hand, controlling the areal densities of these two positive electrode active material layers within a larger range ensures that the LMFP-based positive electrode plate has a high energy density, thereby fully enhancing the charge-discharge performance of the LMFP-based battery. On the other hand, keeping the difference in areal density between these two layers below a certain value ensures that the two active material layers have almost identical areal densities. This allows for a better balance in the electron and ion transmission efficiency between the two layers, effectively reducing polarization of the battery during the charge-discharge cycles, decreasing the DCR growth rate of the battery, and optimizing the cycling performance of the battery.

The present application further specifies the mass ratio of the first lithium manganese iron phosphate active material to the nickel-cobalt-manganese ternary active material in the first positive electrode active material layer. By simultaneously controlling the areal densities of the first and second positive electrode active material layers, as well as the mass ratio of the first lithium manganese iron phosphate active material to the nickel-cobalt-manganese ternary active material, it is more conducive to ensuring a balance in lithium-ion transmission. This approach fully leverages the advantages of LMFP's long cycle life and high safety, reduces the degree of side reactions in the battery, decreases heat generation, thereby reducing polarization of the battery, and optimizes the thermal stability and cycling performance of the battery.

In some embodiments, ρ₁ and ρ₂ satisfy: ρ₁ = ρ₂. Controlling the areal density of the first positive electrode active coating layer 20 to be equal to the areal density of the second positive electrode active coating layer 30 can achieve a better balance in the electron and ion transmission efficiency between the two layers. This further promotes synergistic effects and optimizes the cycling performance of the battery.

In some embodiments, ρ₁ and ρ₂ satisfy: 240 g/m² ≤ ρ₁ ≤ 260 g/m², and 240 g/m² ≤ ρ₂ ≤ 260 g/m². Generally, the greater the areal density of the positive electrode plate, the higher the energy density of the battery. However, if the areal density of the positive electrode plate is too high, the migration path of lithium ions becomes longer, and the internal resistance of the battery increases. This may lead to congestion along the migration path of lithium ions, preventing lithium ions from fully intercalating and deintercalating in a short time, ultimately resulting in a loss of specific capacity. It can also cause the operating temperature of the battery to rise, affecting the lifespan and safety of the battery. Therefore, controlling the areal densities of both the first positive electrode active coating layer 20 and the second positive electrode active coating layer 30 within a certain range, i.e., maintaining the areal density of the positive electrode plate within a specific range, is beneficial for balancing the energy density, the cycling performance, and the safety of the battery.

In some embodiments, the thickness d1 of the first positive electrode active coating layer 20 and the thickness d2 of the second positive electrode active coating layer 30 satisfy: d1 ≥ 105 µm, d2 ≥ 105 µm, and |d1 - d2| ≤ 3 µm. Generally speaking, the thicker the coating thickness of the positive electrode active material layer, the greater the capacity of the battery. However, excessive coating may lead to an increase in the internal resistance of the battery, affecting the output power and cycle life of the battery. Therefore, a balanced consideration is needed when selecting the coating thickness. The present application controls d1 and d2 within a certain range and keeps the difference in their thicknesses within a specific range, which is beneficial for achieving optimal performance of the battery, thereby optimizing the cycling stability of the battery.

In some embodiments, the thickness D of the positive electrode plate satisfy: D ≥ 220 µm. Ensuring that the electrode plate has a certain thickness is beneficial for maintaining a high energy density in the battery. It also ensures that the two positive electrode active material layers have a certain thickness, allowing these layers to fully perform and optimize performance of the battery.

In some embodiments, the thickness D of the positive electrode plate satisfies: 220 µm ≤ D ≤ 230 µm. If the positive electrode plate is too thick, the electron and ion transport paths become longer, increasing the resistance of the electrode plate, which is also detrimental to the cycling performance and thermal stability of the battery.

In some embodiments, the thickness of the positive current collector 10 ranges from 10 µm to 15 µm.

In some embodiments, the positive current collector 10 includes aluminum foil. Specifically, the first positive electrode active coating layer 20 further includes a first conductive agent and a first binder. The mass ratio of the first lithium manganese iron phosphate active material, the nickel-cobalt-manganese ternary active material, the first conductive agent, and the first binder is (80-90):(8-15):(1.2-1.8):(1.5-3).

In some embodiments, the second positive electrode active coating layer 30 further includes a second conductive agent and a second binder. The mass ratio of the second lithium manganese iron phosphate active material, the second conductive agent, and the second binder is (92-98):(1.2-1.8):(1.5-3).

In some embodiments, the first conductive agent and the second conductive agent independently include conductive carbon black (SP) or carbon nanotubes (CNT).

In some embodiments, the first binder and the second binder independently include polyvinylidene fluoride (PVDF).

According to a second aspect of the present application, a method for preparing the positive electrode plate described in the above embodiments is provided, including the following steps: step S1, preparing a lithium manganese iron phosphate positive electrode slurry using the second lithium manganese iron phosphate active material, the second conductive agent, and the second binder; preparing lithium manganese iron phosphate blended with a nickel-cobalt-manganese ternary positive electrode slurry using the first slurry, the nickel-cobalt-manganese ternary active material, the first conductive agent, and the first binder; step S2, controlling a difference between the viscosity of the lithium manganese iron phosphate positive electrode slurry and the viscosity of the lithium manganese iron phosphate blended with the nickel-cobalt-manganese ternary positive electrode slurry to be less than or equal to 4000 mPa·s; simultaneously coating the lithium manganese iron phosphate positive electrode slurry and the lithium manganese iron phosphate blended with the nickel-cobalt-manganese ternary positive electrode slurry on the positive current collector to obtain the positive electrode plate through drying. The lithium manganese iron phosphate blended with the nickel-cobalt-manganese ternary positive electrode slurry is coated on a side close to the positive current collector, and the lithium manganese iron phosphate positive electrode slurry is coated on a side away from the positive current collector. The viscosity can be understood as the flowability of the slurry. When there is a significant difference in viscosity between the upper and lower layers (the second layer and the first layer), it becomes difficult to control the areal density during the coating process. This may easily lead to a large difference in areal density between the upper and lower layers, resulting in a significant difference in the transmission efficiency of electrons and ions between the layers. Consequently, this increases polarization and decreases the performance of the battery.

In some embodiments, in step S1 or step S2, the viscosity of the lithium manganese iron phosphate positive electrode slurry is controlled to be in the range of 8000 mPa·s to 16000 mPa·s, and the viscosity of the lithium manganese iron phosphate blended with the nickel-cobalt-manganese ternary positive electrode slurry is controlled to be in the range of 8000 mPa·s to 16000 mPa·s.

According to a third aspect of the present application, a battery is provided, including the positive electrode plate described in any one of the foregoing embodiments.

In some embodiments, the battery further includes a negative electrode plate having an areal density of 100 g/m² to 105g/m² and a thickness of 127 µm to 135 µm. Ensuring that the areal density and thickness of the negative electrode plate are within the aforementioned range allows for better compatibility with the positive electrode plate provided in the present application. This results in the battery having better cycling performance and thermal stability, with a lower DCR growth rate.

In some embodiments, the negative electrode active material layer in the negative electrode plate includes a negative electrode active material, a third conductive agent, and a third binder. The mass ratio of the negative electrode active material, the third binder, and the third conductive agent is (92-97):(1.5-3):(1.5-3.5).

In some embodiments, the negative electrode active material includes graphite; the third conductive agent includes conductive carbon black (SP); and the third binder includes carboxymethyl cellulose (CMC) or styrene-butadiene rubber (SBR).

In some embodiments, the negative current collector in the negative electrode plate includes copper foil.

In summary, using the positive electrode plate with a double-layer positive electrode active material layer provided in the present application can effectively enhance the conductivity and ionic conductivity of the LMFP material, reduce polarization of the battery and the DCR growth rate, and thereby effectively improve the cycling performance and thermal stability of the battery.

### Example 1

### 1. Preparation of Positive Electrode Plate

The positive electrode plate in this example is prepared according to the following steps:
Step S1. Using N-methyl-2-pyrrolidone (NMP) as a solvent, mix and stir LMFP (LiMn_{0.6}Fe_{0.4}PO₄), SP, PVDF, and CNT in a mass ratio of 96.5:0.9:2:0.6 to obtain LMFP positive electrode slurry. The discharge viscosity of the slurry should be controlled in the range of 8000 mPa·s to 16000 mPa·s at 25°C.

Simultaneously, using NMP as a solvent, mix the obtained LMFP positive electrode slurry with NCM (NCM811), SP, PVDF, and CNT, and stir to obtain LMFP blended with NCM positive electrode slurry. The discharge viscosity of the slurry should be controlled in the range of 8000 mPa·s to 16000 mPa·s at 25°C. In the final first positive electrode active coating layer, the mass proportion of LMFP is 90%, and the mass proportion of NCM (NCM811) is 10%. The amount of LMFP positive electrode slurry added is calculated based on these proportions, and NCM (NCM811), SP, PVDF, and CNT are added in a mass ratio of 96.5:0.9:2:0.6.

Step S2. Place the two types of positive electrode slurries in buffer tanks, ensuring that the viscosity difference between the two slurries does not exceed 4000 mPa·s. Using a dual-layer coating die, simultaneously and evenly coat the two positive electrode slurries on both sides of a 12µm aluminum foil (each side of the aluminum foil is provided with a first positive electrode active coating layer and a second positive electrode active coating layer). Control the coating thickness of the two layers accordingly, with the LMFP blended with NCM positive electrode slurry coated on the side close to the aluminum foil and the LMFP positive electrode slurry coated on the side away from the aluminum foil. Dry the coated foil at 90°C to obtain the positive electrode plate. In the final positive electrode plate prepared in this example, both the areal density of the first positive electrode active coating layer and the areal density of the second positive electrode active material layer are 250 g/m², with the thickness of the first positive electrode active coating layer being 107 µm and the thickness of the second positive electrode active coating layer also being 107 µm.

### 2. Preparation of Negative Electrode Plate and Battery

### (1) Preparation of Negative Electrode Plate

Using deionized water as a solvent, mix and stir artificial graphite, SP, CMC, and SBR in a mass ratio of 95.5:2:0.5:2 to obtain the negative electrode slurry. Then, coat the negative electrode slurry onto an 8 µm copper foil and vacuum dry it at 100°C to obtain the negative electrode plate. The negative electrode plate prepared in this example has an areal density of 100 g/m² and a thickness of 125 µm.

### (2) Preparation of Battery

Cut, die-cut, and slit the vacuum-dried positive and negative electrode plates, as well as the separator. Then, inject the electrolyte under high temperature and negative pressure to assemble a prismatic battery with an aluminum shell. The electrolyte used is 1 M LiPF₆ in a 1:1.1 (mass ratio) mixture of dimethyl carbonate (DMC) and ethylene carbonate (EC).

### Example 2

### 1. Preparation of Positive Electrode Plate

In the process for preparing the positive electrode plate of this example, the difference from Example 1 lies in the control of the coating spacer in the coating equipment. By adjusting the gap of the spacer, the areal density is regulated, resulting in a positive electrode plate where the areal density of the first positive electrode active coating layer is 251.5 g/m², and the areal density of the second positive electrode active material layer is 248.5 g/m². All other operations are consistent with that in Example 1.

### 2. Preparation of Negative Electrode Plate and Battery

The preparation of the negative electrode plate and the battery in this example is consistent with that in Example 1.

### Example 3

### 1. Preparation of Positive Electrode Plate

In the process for preparing the positive electrode plate of this example, the difference from Example 1 lies in the control of the coating spacer in the coating equipment. By adjusting the gap of the spacer, the areal density is regulated, resulting in a positive electrode plate where the areal density of the first positive electrode active coating layer is 253.5 g/m², and the areal density of the second positive electrode active material layer is 246.5 g/m². All other operations are consistent with that in Example 1.

### 2. Preparation of Negative Electrode Plate and Battery

The preparation of the negative electrode plate and the battery in this example is consistent with that in Example 1.

### Example 4

### 1. Preparation of Positive Electrode Plate

In the process for preparing the positive electrode plate of this example, the difference from Example 1 lies in the control of the coating spacer in the coating equipment. By adjusting the gap of the spacer, the areal density is regulated, resulting in a positive electrode plate where both the areal density of the first positive electrode active coating layer and the areal density of the second positive electrode active material layer are 240 g/m². All other operations are consistent with that in Example 1.

### 2. Preparation of Negative Electrode Plate and Battery

The preparation of the negative electrode plate and the battery in this example is consistent with that in Example 1.

### Example 5

### 1. Preparation of Positive Electrode Plate

In the process for preparing the positive electrode plate of this example, the difference from Example 1 lies in the control of the coating spacer in the coating equipment. By adjusting the gap of the spacer, the areal density is regulated, resulting in a positive electrode plate where both the areal density of the first positive electrode active coating layer and the areal density of the second positive electrode active material layer are 260 g/m². The thicknesses of the first positive electrode active coating layer and the second positive electrode active material layer are 107.5 µm each. All other operations are consistent with that in Example 1.

### 2. Preparation of Negative Electrode Plate and Battery

The preparation of the negative electrode plate and the battery in this example is consistent with that in Example 1.

### Example 6

### 1. Preparation of Positive Electrode Plate

In the process for preparing the positive electrode plate of this example, the difference from Example 1 lies in adjusting the coating thickness of the LMFP blended with NCM positive electrode slurry in step S2. This results in a final positive electrode plate where the thickness of the first positive electrode active coating layer is 103 µm, leading to a thickness difference of 4 µm between the first and second positive electrode active material layers. All other operations are consistent with that in Example 1.

### 2. Preparation of Negative Electrode Plate and Battery

The preparation of the negative electrode plate and the battery in this example is consistent with that in Example 1.

### 3. Preparation of Negative Electrode Plate and Battery

The preparation of the negative electrode plate and the battery in this example is consistent with that in Example 1.

### Example 7

### 1. Preparation of Positive Electrode Plate

In the process for preparing the positive electrode plate of this example, the difference from Example 1 lies in adjusting the coating thickness of the two positive electrode slurries in step S2. This results in a final positive electrode plate where the thickness of the first positive electrode active coating layer is 102 µm, the thickness of the second positive electrode active coating layer is 102 µm, and the total thickness of the positive electrode plate is 214 µm. All other operations are consistent with that in Example 1.

### 2. Preparation of Negative Electrode Plate and Battery

The preparation of the negative electrode plate and the battery in this example is consistent with that in Example 1.

### Example 8

### 1. Preparation of Positive Electrode Plate

In the process for preparing the positive electrode plate of this example, the difference from Example 1 lies in adjusting the coating thickness of the two positive electrode slurries in step S2. This results in a final positive electrode plate where the thickness of the first positive electrode active coating layer is 112 µm, the thickness of the second positive electrode active coating layer is 112 µm, and the total thickness of the positive electrode plate is 234 µm. All other operations are consistent with that in Example 1.

### 2. Preparation of Negative Electrode Plate and Battery

The preparation of the negative electrode plate and the battery in this example is consistent with that in Example 1.

### Example 9

### 1. Preparation of Positive Electrode Plate

In this example, the positive electrode plate is consistent with that in Example 1.

### 2. Preparation of Negative Electrode Plate and Battery

In the process for preparing the negative electrode plate of this example, the areal density of the prepared negative electrode plate is controlled to be 107 g/m².

The preparation of the battery in this example is consistent with that in Example 1.

### Example 10

### 1. Preparation of Positive Electrode Plate

In this example, the positive electrode plate is consistent with that in Example 1.

### 2. Preparation of Negative Electrode Plate and Battery

In the process for preparing the negative electrode plate of this example, the areal density of the prepared negative electrode plate is controlled to be 98 g/m².

The preparation of the battery in this example is consistent with that in Example 1.

### Example 11

### 1. Preparation of Positive Electrode Plate

In this example, the positive electrode plate is consistent with that in Example 1.

### 2. Preparation of Negative Electrode Plate and Battery

In the process for preparing the negative electrode plate of this example, the thickness of the prepared negative electrode plate is controlled to be 124 µm.

The preparation of the battery in this example is consistent with that in Example 1.

### Comparative Example 1

### 1. Preparation of Positive Electrode Plate

In the process for preparing the positive electrode plate of this comparative example, the difference from Example 1 lies in the control of the coating spacer in the coating equipment. By adjusting the gap of the spacer, the areal density is regulated, resulting in a positive electrode plate where the areal density of the first positive electrode active coating layer is 250.5 g/m², and the areal density of the second positive electrode active material layer is 241.5 g/m². All other operations are consistent with that in Example 1.

### 2. Preparation of Negative Electrode Plate and Battery

The preparation of the negative electrode plate and the battery in this comparative example is consistent with that in Example 1.

### Comparative Example 2

### 1. Preparation of Positive Electrode Plate

In the process for preparing the positive electrode plate of this comparative example, the difference from Example 1 lies in the control of the coating spacer in the coating equipment. By adjusting the gap of the spacer, the areal density is regulated, resulting in a positive electrode plate where both the areal density of the first positive electrode active coating layer and the areal density of the second positive electrode active material layer are 220 g/m². All other operations are consistent with that in Example 1.

### 2. Preparation of Negative Electrode Plate and Battery

The preparation of the negative electrode plate and the battery in this comparative example is consistent with that in Example 1.

### Comparative Example 3

### 1. Preparation of Positive Electrode Plate

In the process for preparing the positive electrode plate of this comparative example, the difference from Example 1 is that during the coating process, both layers are coated with LMFP blended with NCM positive electrode slurry. This means that the active materials for both the first and second positive electrode active coating layers each consist of LMFP and NCM. All other operations are consistent with that in Example 1.

### 2. Preparation of Negative Electrode Plate and Battery

The preparation of the negative electrode plate and the battery in this comparative example is consistent with that in Example 1.

### Comparative Example 4

### 1. Preparation of Positive Electrode Plate

In the process for preparing the positive electrode plate of this comparative example, the difference from Example 1 is that during the coating process, the first layer (the side close to the aluminum foil) is coated with LMFP positive electrode slurry, and the second layer (the side away from the aluminum foil) is coated with NCM positive electrode slurry. This means that the active material layers for the first and second positive electrode layers are LMFP and NCM, respectively. The preparation of the LMFP positive electrode slurry is consistent with that in Example 1. The preparation of the NCM positive electrode slurry involves using water as a solvent and mixing NCM (NCM811), SP, PVDF, and CNT in a mass ratio of 96.5:0.9:2:0.6. The discharge viscosity of the slurry is controlled in the range of 8000 mPa·s to 16000 mPa·s at 25°C. All other operations are consistent with that in Example 1.

### 2. Preparation of Negative Electrode Plate and Battery

The preparation of the negative electrode plate and the battery in this comparative example is consistent with that in Example 1.

### Comparative Example 5

### 1. Preparation of Positive Electrode Plate

In the process for preparing the positive electrode plate of this comparative example, the difference from Example 1 is that during the preparation of the LMFP blended with NCM positive electrode slurry in step S1, the mass ratio of LMFP to NCM (NCM811) is adjusted so that in the first positive electrode active material layer of the final positive electrode plate, the mass proportion of the first lithium manganese iron phosphate active material is 90.5%, and the mass proportion of the nickel-cobalt-manganese ternary active material is 6%. All other operations are consistent with that in Example 1.

### 2. Preparation of Negative Electrode Plate and Battery

The preparation of the negative electrode plate and the battery in this comparative example is consistent with that in Example 1.

### Comparative Example 6

### 1. Preparation of Positive Electrode Plate

In the process for preparing the positive electrode plate of this comparative example, the difference from Example 1 is that during the preparation of the LMFP blended with NCM positive electrode slurry in step S1, the mass ratio of LMFP to NCM (NCM811) is adjusted so that in the first positive electrode active material layer of the final positive electrode plate, the mass proportion of the first lithium manganese iron phosphate active material is 80%, and the mass proportion of the nickel-cobalt-manganese ternary active material is 16.5%. All other operations are consistent with that in Example 1.

### 2. Preparation of Negative Electrode Plate and Battery

The preparation of the negative electrode plate and the battery in this comparative example is consistent with that in Example 1.

### Test Example

### 1. Experimental Construction Method

### (1) DCIR Test:

The batteries obtained from each example and comparative example were calibrated for capacity at 25°C using a 1C rate, and the SOC was adjusted to 50%. Then, all batteries were discharged at 1C for 30 seconds at 50% SOC to calculate the discharge DCIR (DCR). The DCIR is calculated as (cut-off voltage after discharge - cut-off voltage before discharge) / current. Additionally, the DCR growth rate after 50 cycles was tested, where the DCIR growth rate is calculated as (DCIR at cycle 50 - initial DCIR) / initial DCIR. The test results are shown in Table 1.

### (2) Cycle Performance Test:

The batteries obtained from each example and comparative example were subjected to a cycle test at 25°C after resting for 1 hour. The test was conducted at a 1C/1C rate with a charge-discharge voltage range of 2.5 V to 4.25 V. The capacity retention rate after 500 cycles was measured. The cycle test results are shown in Table 1.

### (3) Thermal Runaway Test:

The batteries obtained from each example and comparative example were charged to 100% SOC and then overcharged with a 1C current to trigger thermal runaway. Charging was stopped, and after observing for 1 hour, the temperature of the large surface (surface of the shell) of the battery was measured. The results are shown in Table 1.

### 2. Experimental Results

The relevant electrochemical performance test results for the batteries obtained from Examples 1-11 and Comparative Examples 1-6 are shown in Table 1.

**Table 1: Relevant Electrochemical Performance Test Results for Batteries Obtained from Examples 1-11 and Comparative Examples 1-6**

| Group | DICR, mΩ | DICR growth rate (**%)** | Capacity retention rate ( %) | Thermal runaway temperature after 1 hour ( °C) |
|---|---|---|---|---|
| Example 1 | 0.92 | 22.4 | 93.89 | 206 |
| Example 1 | 0.93 | 23.1 | 93.45 | 205 |
| Example 3 | 0.95 | 23.5 | 93.37 | 207 |
| Example 4 | 0.94 | 23.7 | 93.28 | 205 |
| Example 5 | 0.97 | 24.5 | 92.98 | 206 |
| Example 6 | 0.94 | 24.9 | 92.40 | 207 |
| Example 7 | 0.92 | 24.6 | 92.27 | 206 |
| Example 8 | 0.98 | 25.2 | 92.25 | 210 |
| Example 9 | 0.99 | 25.4 | 92.21 | 207 |
| Example 10 | 0.94 | 24.8 | 92.29 | 209 |
| Example 11 | 0.94 | 23.2 | 92.30 | 208 |
| Comparative Example 1 | 0.98 | 26.8 | 89.27 | 213 |
| Comparative Example 2 | 0.94 | 26.5 | 90.13 | 216 |
| Comparative Example 3 | 0.98 | 27.3 | 88.57 | 220 |
| Comparative Example 4 | 0.97 | 29.3 | 88.12 | 326 |
| Comparative Example 5 | 1.01 | 24.5 | 88.17 | 219 |
| Comparative Example 6 | 0.95 | 24.1 | 90.24 | 308 |

As shown in Table 1, the batteries prepared using the positive electrode plates provided in the present application exhibit a lower DCIR growth rate and maintain a high cycle capacity retention rate after a certain number of cycles. More importantly, the batteries demonstrate excellent thermal stability, with a lower thermal runaway temperature, as specifically referenced in Examples 1-11.

In Comparative Example 1, the areal density difference between the first and second positive electrode active material layers is 9 g/m². This excessive areal density difference leads to an imbalance in electron and ion transport efficiency, resulting in an increased DCIR growth rate, decreased cycle retention rate, and elevated thermal runaway temperature.

In Comparative Example 2, the areal densities of both the first and second positive electrode active material layers are too low, leading to a decrease in the energy density of the battery. This also affects the DCIR growth rate, cycle retention rate, and thermal runaway temperature of the battery.

In Comparative Example 3, both the first and second positive electrode active material layers are formed by coating LMFP blended with NCM positive electrode slurry. That is, the active materials in both the first and second positive electrode active coating layers each consist of LMFP and NCM. The combination of the two active materials is suboptimal, resulting in reduced ion and electron transport performance during the cycling process. This causes an increase in the DCIR growth rate, a decrease in cycle retention rate, and an elevated thermal runaway temperature of the battery.

In Comparative Example 4, the first layer (the side close to the aluminum foil) is coated with LMFP positive electrode slurry, and the second layer (the side away from the aluminum foil) is coated with NCM positive electrode slurry. That is, the active material layers of the first and second positive electrode active material layers are LMFP and NCM, respectively. Similar to Comparative Example 3, this combination leads to reduced ion and electron transport performance during the cycling process, resulting in an increased DCIR growth rate, decreased cycle retention rate, and elevated thermal runaway temperature of the battery.

In Comparative Examples 5 and 6, the proportions of LMFP in the first positive electrode active coating layers are excessively high and excessively low, respectively. This leads to a reduction in the energy density of the battery or a decrease in thermal stability, thereby affecting the performance of the battery.

Further comparison of Example 1 with Examples 2-3 reveals that when the areal density difference between the first and second positive electrode active material layers does not exceed 7 g/m², the batteries prepared with the positive electrode plates exhibit better cycling performance and thermal stability, along with a lower DCIR growth rate. In addition, it can be further seen that when the areal density difference between the first and second positive electrode active material layers is zero (i.e., the areal densities of the first and second positive electrode active material layers are equal, and in practical situations, efforts are made to adjust this difference to be very small, approaching or equal to zero), the overall performance of the battery is enhanced, providing better comprehensive performance.

Comparing Example 1 with Examples 4-5, it is observed that the areal densities in Examples 4 and 5 are relatively smaller and larger, respectively, compared to Example 1. This also affects the performance of the batteries from Examples 4 and 5 to some extent. This is because an areal density that is too low may impact the energy density of the battery, while an areal density that is too high may affect the transport performance of lithium ions and electrons.

Comparing Example 1 with Examples 6-8, it is observed that in Example 6, the thickness d1 of the first positive electrode active coating layer is too small, and the thickness difference between the first and second positive electrode active coating layers is quite large. This affects the lithium ion or electron transport performance during the cycling process of the battery, leading to a decline in the performance of the battery. In Example 8, both the thickness d1 of the first positive electrode active coating layer and the thickness d2 of the first positive electrode active coating layer are too small, and the total thickness of the positive electrode plate is also too small, resulting in reduced energy density of the battery, which similarly affects the cycling performance of the battery to some extent. In Example 9, both the thickness d1 of the first positive electrode active coating layer and the thickness d2 of the first positive electrode active coating layer are too large, and the total thickness of the positive electrode plate is also too large, leading to longer lithium ion or electron transport paths, which may also impact the overall cycling performance, resistance, and thermal stability of the battery.

Comparing Example 1 with Examples 9-11, it is observed that in Example 9, the areal density of the negative electrode plate is too large, in Example 10, the areal density of the negative electrode plate is too small, and in Example 11, the thickness of the negative electrode plate is too small. These factors all lead to a decline in the cycling performance of the battery. This indicates that it is necessary to control the areal density and thickness of the negative electrode plate to ensure better compatibility with the positive electrode plate, thereby jointly optimizing the performance of the battery.

## Claims

1. A positive electrode plate, comprising a positive current collector, and a first positive electrode active coating layer and a second positive electrode active coating layer sequentially disposed on at least one side of the positive current collector;
wherein the first positive electrode active coating layer is disposed close to a side of the positive current collector, and the first positive electrode active coating layer comprises a first lithium manganese iron phosphate active material and a nickel-cobalt-manganese ternary active material; in the first positive electrode active coating layer, a mass proportion of the first lithium manganese iron phosphate active material ranges from 82% to 88%, and a mass proportion of the nickel-cobalt-manganese ternary active material ranges from 7% to 15%;
wherein the second positive electrode active coating layer is disposed away from a side of the positive current collector, and the second positive electrode active coating layer comprises a second lithium manganese iron phosphate active material; and
wherein an areal density ρ₁ of the first positive electrode active coating layer and an areal density ρ₂ of the second positive electrode active coating layer satisfy: ρ₁ ≥ 240 g/m², ρ₂ ≥ 240 g/m², and |ρ₁ - ρ₂| ≤ 7 g/m².

2. The positive electrode plate of claim 1, wherein ρ₁ and ρ₂ satisfy: ρ₁ = ρ₂.

3. The positive electrode plate of claim 1 or claim 2, wherein ρ₁ and ρ₂ satisfy: 240 g/m² ≤ ρ1 ≤ 260 g/m², and 240 g/m² ≤ p2 ≤ 260 g/m².

4. The positive electrode plate of any one of claims 1 to 3, wherein a thickness d₁ of the first positive electrode active coating layer and a thickness d₂ of the second positive electrode active coating layer satisfy: d₁ ≥ 105 µm, d₂ ≥ 105 µm, and |d₁ - d₂| ≤ 3 µm.

5. The positive electrode plate of any one of claims 1 to 4, wherein a thickness D of the positive electrode plate satisfies: D ≥ 220 µm.

6. The positive electrode plate of claim 5, wherein the thickness D of the positive electrode plate satisfies: 220 µm ≤ D ≤ 230 µm.

7. A method for preparing the positive electrode plate as claimed in any one of claims 1 to 6, comprising the following steps:
step S1, preparing a lithium manganese iron phosphate positive electrode slurry using the second lithium manganese iron phosphate active material, a second conductive agent, and a second binder; preparing lithium manganese iron phosphate blended with a nickel-cobalt-manganese ternary positive electrode slurry using the first slurry, the nickel-cobalt-manganese ternary active material, a first conductive agent, and a first binder; and
step S2, controlling a difference between a viscosity of the lithium manganese iron phosphate positive electrode slurry and a viscosity of the lithium manganese iron phosphate blended with the nickel-cobalt-manganese ternary positive electrode slurry to be less than or equal to 4000 mPa·s; simultaneously coating the lithium manganese iron phosphate positive electrode slurry and the lithium manganese iron phosphate blended with the nickel-cobalt-manganese ternary positive electrode slurry on the positive current collector to obtain the positive electrode plate through drying;
wherein the lithium manganese iron phosphate blended with the nickel-cobalt-manganese ternary positive electrode slurry is coated on a side close to the positive current collector, and the lithium manganese iron phosphate positive electrode slurry is coated on a side away from the positive current collector.

8. The method for preparing the positive electrode plate of claim 7, wherein in the step S1 or the step S2, the viscosity of the lithium manganese iron phosphate positive electrode slurry is controlled to be 8000 mPa·s to 16000 mPa·s, and the viscosity of the lithium manganese iron phosphate blended with the nickel-cobalt-manganese ternary positive electrode slurry is controlled to be 8000 mPa·s to 16000 mPa·s.

9. A battery, comprising the positive electrode plate as claimed in any one of claims 1 to 6.

10. The battery of claim 9, further comprising a negative electrode plate, wherein the negative electrode plate has an areal density ranging from 100 g/m² to 105 g/m²; and
wherein the negative electrode plate has a thickness ranging from 127 µm to 135 µm.
